# EUROPEAN PATENT SPECIFICATION

(11) **EP 4 360 799 B1**
(45) Date of publication and mention of the grant of the patent: **05.08.2026**
(21) Application number: 22845625.7
(22) Date of filing: 15.03.2022
(51) Int. Cl.: B23K 26/364, B23K 26/362

(54) **LASER MACHINING METHOD AND LASER MACHINING DEVICE**
LASERBEARBEITUNGSVERFAHREN UND LASERBEARBEITUNGSVORRICHTUNG
PROCÉDÉ D'USINAGE AU LASER ET DISPOSITIF D'USINAGE AU LASER

(30) Priority: 20.07.2021 JP 2021119330
(43) Date of publication of application: 01.05.2024
(73) Proprietor: ADTEC Engineering Co., Ltd., Tokyo 105-0001 (JP)
(72) Inventor: SENGA, Takehito, Tokyo 100-8150 (JP)
(74) Representative: Maiwald GmbH
(86) International application number: PCT/JP2022/011504
(87) International publication number: WO 2023/002685

(56) References cited:
- WO-A1-2019/082310
- WO-A2-2014/083160
- JP-A- 2001 084 579
- JP-A- 2008 247 038
- JP-A- 2011 067 873
- JP-A- 2011 067 873
- US-A1- 2002 117 067

## Description

### TECHNICAL FIELD

The present invention relates to a laser machining method and a laser machining device.

### BACKGROUND ART

Conventionally, steel sheets have been used for transportation equipment and other industrial products, and spot welding is generally performed to join steel sheets together.

In recent years, efficient use of energy has been required in various industrial sectors due to sustainable development goals (SDGs). No exception is made for transportation equipment and other industrial products, and transportation equipment and suchlike are required to be made lighter. Hence, research and development have been conducted to use lightweight materials in place of conventional steel sheets.

Aluminum material is known, for example, as one of lightweight materials in place of steel sheets. However, aluminum material is not suitable for spot welding and thus joining by rivets is performed sometimes to join aluminum materials together or join an aluminum material and another material together. Unfortunately, joining by rivets constitutes a factor causing an increase in number of parts in joined areas or militating against weight reduction. In other words, when an alternative material for steel sheets is considered, a method of joining the alternative material also needs to be considered.

Nowadays, a joining method using an adhesive is receiving attention as a method for joining various materials. Unlike welding, the adhesive enables joining of a base metal without being affected by a property and a thickness of the base metal. For instance, this method has an advantage in that even a base metal that is difficult to be properly joined by welding, such as a base metal with low electrical resistance or a thin base metal, can be properly joined by an adhesive.

Prior to joining by an adhesive, grooves to be filled with the adhesive are disposed on a bonding surface to increase adhesive strength (see Patent Document 1). Patent Document 2 describes the features of the preamble of claim 1.

### PRIOR ART DOCUMENT

### PATENT DOCUMENT

Patent Document 1: JP-A-2011-7250
Patent Document 2: WO 2014/083160 A2

### SUMMARY OF THE INVENTION

### PROBLEMS TO BE SOLVED BY THE INVENTION

In joining by an adhesive, a challenge is to improve bonding strength and durability of the adhesive. Hence, the inventor of the present invention has studied a way of forming a large number of fine grooves to be filled with the adhesive on a surface of a base material that is to be joined. Increasing a surface area put into contact with the adhesive helps to improve the bonding strength and durability. The present inventor, as a result of intensive research, has come up with an idea of using laser ablation to form fine grooves.

Accordingly, an object is to provide a laser machining method and a laser machining device that can form a large number of fine grooves on a surface of a base material.

### MEANS FOR SOLVING THE PROBLEMS

A laser machining method according to the present invention is disclosed in present claim 1.

By intensively irradiating a focused spot having a small area on a surface of a base material with high energy laser light, the surface is locally heated and is evaporated or sublimated to make a hole on the base material. This machining method is generally referred to as laser ablation. Since the base material is relatively moved while the hole is being made by ablation, this method enables formation of a groove. Forming a groove using laser light makes it possible to precisely form a fine groove as compared with general machining. Groove formation using laser light can be applied to various materials including aluminum materials.

Due to use of the laser light in the form of pulse, a rise in temperature has less effect on the material. For instance, if a base material having high reflectance and high thermal conductivity, such as an aluminum material, is irradiated with high power laser light continuously oscillating, high energy is imparted to a surface of the base material. This can cause the surface to be melted or debris to be generated. However, use of the laser light in the form of pulse makes it possible to reduce a total amount of energy imparted to the surface of the base material while a peak power density of the pulses is maintained at a high level. This helps to prevent the surface from being melted and generating debris.

"The plurality of laser emitting ends arranged separately from each other", which will be described in detail later, means that ends emitting laser light to form grooves adjacent to each other are arranged separate from each other and kept from contact with each other. According to the present invention, the surface is irradiated with a plurality of the beams of the laser light passing through the light collection optical system that reduces a gap between the beams of the light. This allows a plurality of grooves to be formed at narrow pitch gaps. A density of the grooves rises and thus a surface area put into contact with an adhesive increases. This method allows a plurality of the grooves to be simultaneously formed and thus provides a production efficiency applicable to a volume production process.

The plurality of focused spots are formed so as to be aligned in a third arrangement direction and a fourth arrangement direction, and
the third arrangement direction and the fourth arrangement direction each differ from the second direction. This allows the plurality of grooves to be formed at narrower pitch gaps and increases a number of the grooves to be simultaneously formed.

An incidence angle θs that is formed by an optical axis of each of the plurality of beams of the laser light incident on the surface to be machined with a normal line to the surface may be 20 degrees or less. This helps to form a deep groove having a reduced inclination and results in an increased amount of the filled-in adhesive and an improved degree of filling, maintaining satisfactory adhesiveness. This also makes depths of the grooves formed by the beams of the laser light uniform and thus contributes to uniformed adhesive strength.

The light collection optical system may include a single unit of a condenser lens on which the beams of the laser light are incident, and
a focal length of the condenser lens may be less than 300 mm. This allows the plurality of grooves to be formed at narrow pitch gaps (for example, 100 µm or less).

At least one diffractive optical element is disposed between the plurality of laser emitting ends and the light collection optical system to convert at least one of the beams of the laser light into a plurality of branched laser beams.

The at least one diffractive optical element may convert each of the plurality of beams of the laser light into a plurality of branched laser beams.

The at least one diffractive optical element may make the plurality of beams of the laser light are incident on a same diffractive optical element.

The laser emitting ends may constitute an emitting end of a fiber bundle that includes a plurality of fibers bundled together, and
the fibers may be arranged at the emitting end such that the focused spots are formed in a predetermined position.

The laser emitting ends may constitute an emitting end of a fiber bundle that includes a plurality of fibers bundled together, and
the fibers may be arranged at the emitting end such that the third arrangement direction for the focused spots is identical to the first direction. Although details will be described later, this makes places where the grooves start to be formed uniform and results in a small blank area where no groove is formed.

A beam shaping optical system may be disposed between the laser emitting ends and the light collection optical system such that elements of the beam shaping optical system correspond to the plurality of respective laser emitting ends.

The beam shaping optical system may include a beam expander to expand a diameter of each of the beams of the laser light and a converging optical system on a light-emitting side of the beam expander, and
the beams of the laser light may be incident on the light collection optical system while gradually reducing the diameter of each of the beams of the laser light. This makes the beams of the laser light condensed by the light collection optical system less likely to intersect each other, allowing the grooves to be made finer.

The laser machining method described above may be performed on the surface to be machined at a plurality of sites that are separated from each other in the second direction. This allows the grooves to be made deeper or allows an increased number of the grooves to be formed, resulting in improved production efficiency.

A laser machining device according to the present invention is described in present claim 11.

The plurality of focused spots are formed so as to be aligned in a third arrangement direction and a fourth arrangement direction, and
the third arrangement direction and the fourth arrangement direction each differ from the second direction.

At least one diffractive optical element is disposed between the plurality of laser emitting ends and the light collection optical system to convert at least one of the beams of the laser light into a plurality of branched laser beams.

The laser emitting ends may constitute an emitting end of a fiber bundle that includes a plurality of fibers bundled together, and
the fibers may be arranged at the emitting end such that the focused spots are formed in a predetermined position.

The laser emitting ends may constitute an emitting end of a fiber bundle that includes a plurality of fibers bundled together, and
the fibers may be arranged at the emitting end such that the third arrangement direction for the focused spots is identical to the first direction.

The laser machining device may include a plurality of light sources connected to the plurality of respective laser emitting ends, the plurality of light sources each outputting laser light having a peak power density of greater than or equal to 100 kW/cm²,
in which the laser light enables the focused spots to cause ablation.

### EFFECT OF THE INVENTION

This makes it possible to provide a laser machining method and a laser machining device that can form a large number of fine grooves on a surface of a base material.

### BRIEF DESCRIPTION OF THE DRAWINGS

Fig. 1 is a diagram showing a laser machining device of a first embodiment (not claimed as such).
Fig. 2 is a diagram showing beams of laser light being radiated.
Fig. 3 is a diagram showing the laser machining device of Fig. 1 in detail.
Fig. 4A is a diagram of laser emitting ends in the laser machining device of the first embodiment, viewed from a beam expander side in a -Z direction.
Fig. 4B is a diagram of a surface of a base material, viewed in a +Z direction from a position at which a condenser lens is disposed.
Fig. 5 is a cross-sectional view showing laser light being incident on a base material.
Fig. 6 is a diagram showing a modification of the laser machining device of the first embodiment.
Fig. 7A is a diagram of laser emitting ends in the laser machining device of the modification, viewed from a beam expander side in a -Z direction.
Fig. 7B is a diagram of a surface of a base material, viewed in a +Z direction from a position at which a condenser lens is disposed.
Fig. 8 is a diagram of a surface of a base material in the first embodiment, viewed in a +Z direction from a position at which a condenser lens is disposed.
Fig. 9 is a diagram showing a laser machining device according to a second embodiment (in accordance with the invention).
Fig. 10 is a diagram of a diffractive optical element, viewed from a condenser lens in a -Z direction.
Fig. 11 is a diagram showing a modification of the laser machining device of the second embodiment.
Fig. 12 is a diagram of diffractive optical elements of the modification, viewed from a condenser lens in a -Z direction.
Fig. 13A is a diagram showing a first example in which laser machining is performed by a combination of a plurality of laser machining devices.
Fig. 13B is a diagram showing a second example in which laser machining is performed by a combination of a plurality of laser machining devices.

### MODES FOR CARRYING OUT THE INVENTION

Embodiments of a laser machining device will be described with reference to the drawings. It should be noted that the following drawings are schematically illustrated, the dimensional ratio in the drawings does not necessarily coincide with the actual dimension ratio, and the dimensional ratios do not necessarily coincide between the drawings.

Hereinafter, each of the drawings is described with reference to an XYZ coordinate system. When it is necessary to make a distinction between positive and negative to express a direction herein, the direction is described with a positive or negative sign, such as "+X direction" or "-X direction". In a case where there is no need to distinguish between positive and negative directions, the direction is simply described as the "X direction". Namely, in the present specification, in a case where a direction is simply described as "X direction", both "+X direction" and "-X direction" are included. The same applies to a Y direction and a Z direction. In the embodiments described hereinafter, an XY plane extending along the X direction and the Y direction is a plane extending along a surface of a base material, and the Z direction represents the normal direction to the surface of the base material.

### <First embodiment (not claimed as such)>

### [Outline of laser machining device]

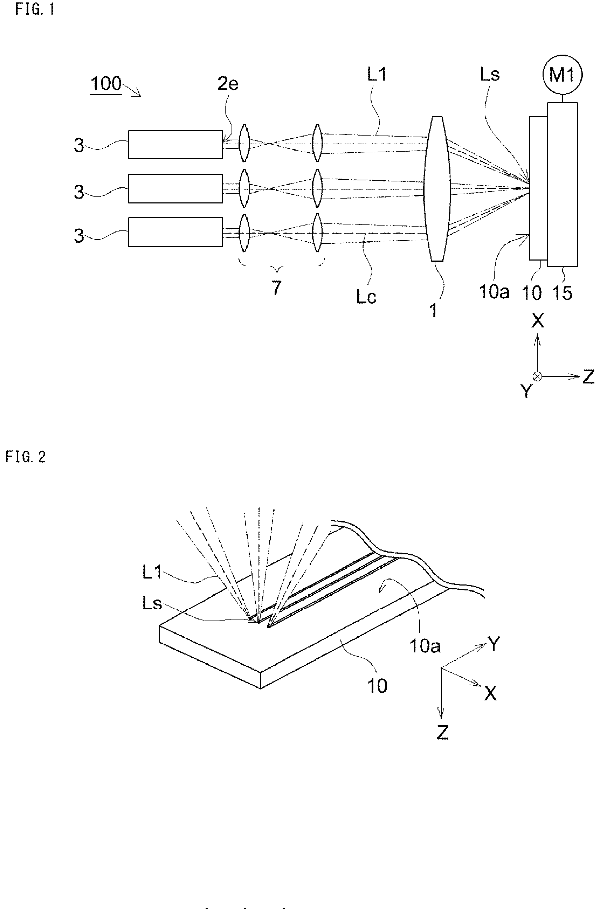

Fig. 1 is a diagram showing a laser machining device 100 according to an embodiment not covered by the present invention. With reference to the diagram, fundamentals of the laser machining device 100 will be described.

The laser machining device 100 includes a plurality of laser emitting ends 2e, a light collection optical system on which beams of laser light L1 emitted from the laser emitting ends 2e are incident, a driving mechanism M1 to move a base material 10, and a controller (not shown). Each of the laser emitting ends 2e is connected to a laser source 3 that generates laser light in a form of pulse, and beams of the pulsed laser light L1 are emitted from the laser emitting ends 2e into a space. An optical axis Lc of each beam of the laser light L1 is indicated by broken lines. For improved visibility in the diagrams, most of a plurality of beams of light and components present in the diagrams are only partly denoted by numerals or symbols.

The laser emitting end 2e is a place from which laser light emitted from the laser source 3 is first radiated into the space. The laser source 3 may include an amplifier unit (for example, a fiber amplifier) to amplify laser light in addition to a light source, i.e., a generating unit that generates laser light. If such an amplifier unit exists in a process between generation of laser light and irradiation of the base material 10 with the laser light, the amplifier unit and elements upstream of the amplifier unit are included in the laser source 3. Thus, when the laser source includes an amplifier unit, the laser emitting end 2e is a place from which laser light amplified by the amplifier unit is first radiated into the space.

A plurality of the laser sources 3 each output laser light having preferably a peak power density of greater than or equal to 100 kW/cm² or having more preferably a peak power density of greater than or equal to 1 MW/cm² to impart a level of energy to the base material 10 so as to cause ablation on a surface to be machined 10a of the base material 10. When the laser light has a peak power density greater than or equal to the numerical value described above, a relative movement speed between the light collection optical system and the base material 10 is readily set to 125 mm/sec or higher, although this differs depending on conditions such as a property of the base material 10, a depth of a groove, and a repetition frequency for the pulsed laser light. A relative movement speed of 125 mm/sec indicates that time required to machine, for example, a 30 m long base material by laser is four minutes. In other words, this suggests the capability of providing a production efficiency applicable to a volume production process. In the invention, laser light is branched by a diffractive optical element (described in detail in a second embodiment), and each of the laser sources 3 preferably outputs laser light having a higher peak power density. A wavelength of the laser light output from the laser source 3 is a wavelength in an infrared range (for example, a wavelength of 1064 nm in the case of a fiber laser of an yttrium aluminum garnet (YAG) laser and a wavelength of 10600 nm in the case of a CO₂ laser).

Beams of the laser light emitted from the respective laser emitting ends 2e are separated from each other in the X direction (a first direction). In Fig. 1, the three laser emitting ends 2e are arranged in a line along an X axis. However, the laser emitting ends 2e may be arranged in two or more lines along the X axis, four or more laser emitting ends 2e may be arranged, or the laser emitting ends may not be arranged along the X axis. This will be described in detail later.

The base material 10 has the surface to be machined 10a (hereinafter sometimes simply referred to as a "surface 10a") at a position facing the light collection optical system. In the present embodiment, laser light travels from the laser emitting ends 2e to the surface 10a in a +Z direction, and the laser machining device does not include an optical system (for example, a reflective optical system) configured to change an overall direction of travel of the laser light between the laser emitting ends 2e and the surface 10a. However, the laser machining device may include an optical system between the laser emitting ends 2e and the surface 10a to change the direction of travel of the laser light. An optical system that can sequentially change the direction of travel of the laser light may be built in the laser machining device 100 to change the direction of travel of the laser light in response to a shape of the surface 10a while the light collection optical system and the surface 10a are moved relative to each other.

The laser machining device 100 of the present embodiment includes the plurality of laser sources 3 connected to the plurality of respective laser emitting ends 2e. However, the laser machining device 100 may not include the laser sources 3. In this case, the laser emitting ends 2e are connected to a laser source outside the laser machining device 100.

The base material 10 is not a component of the laser machining device 100, but is shown in Fig. 1 for convenience of description. Similarly, in some cases, the base material 10 is shown for the laser machining device in the other diagrams. The base material 10 is not limited to the aluminum material. The material for the base material 10 may be another metal material or may be a resin.

In the diagrams, the surface 10a of the base material 10 is illustrated as a surface parallel to the XY plane. However, this does not limit a shape of the surface 10a. The surface 10a may include, for example, any of an inclined plane, a curved surface, and a surface having unevenness. The base material 10 shown in the diagrams is shaped like a plate (extending in the XY directions and being thin in the Z direction). However, the base material is not necessarily limited to such a shape. The base material 10 may have, for example, a rod shape or a block shape or may have a complicated three-dimensional shape partly having a plate shape, a rod shape, or a block shape.

When the surface 10a of the base material 10 is irradiated with a plurality of beams of the laser light L1, a focused spot Ls is formed for each beam of the laser light L1. The focused spot Ls is locally heated by energy of the laser light, and this causes ablation. Temperature of the focused spot Ls instantaneously rises to several thousand degrees Celsius (°C), and thus the surface 10a in the focused spot Ls is evaporated or sublimated to make a hole on the surface 10a.

Since laser light output from the laser source 3 is output in the form of pulse, peak power (pulse energy per pulse width (time)) is high, and a level of energy that causes the surface 10a to be locally evaporated or sublimated is imparted to the base material 10. However, owing to the pulsed laser light, a total amount of energy is small, and it is difficult for the laser light to cause a wide region of the base material 10 to reach high temperature. This helps to prevent the surface 10a from being undesirably melted and generating debris, and the heat is less likely to have a harmful effect on the base material 10.

Using the driving mechanism M1, the laser machining device moves a condenser lens 1 (an embodiment of the light collection optical system, described in detail later) and the surface 10a relative to each other both along the surface 10a and in the Y direction orthogonal to the X direction. In the present embodiment, with the condenser lens 1 being fixed, the base material 10 together with a stage 15 on which the base material 10 is placed are moved in a +Y direction (a second direction). As shown in Fig. 2, the base material 10 at this time is moved, with the surface 10a being irradiated with the laser light L1. The condenser lens 1 may be moved without movement of the base material 10, or both the base material 10 and the condenser lens 1 may be moved, with proviso that the condenser lens 1 and the base material 10 are moved relative to each other.

Fig. 2 is a diagram showing beams of laser light being radiated. As shown in Fig. 2, the base material 10 is moved while the surface 10a is irradiated with a plurality of beams of the laser light and is ablated, and a plurality of grooves are thereby formed on the surface 10a.

The light collection optical system reduces a gap between the beams of the laser light L1, and the surface 10a is irradiated with the beams of the laser light. This makes each focused spot Ls smaller and makes the focused spots Ls crowd. As a result, a plurality of grooves are formed at narrow pitch gaps. Since the gap between the adjacent grooves is narrow, the formation of the grooves increases an area of the surface and improves the strength of joining by an adhesive. However, the laser machining device is designed so as to prevent the plurality of beams of the laser light L1 from intersecting each other on the surface 10a and the focused spots Ls from overlapping each other. It should be noted that this design does not prevent the beams of the laser light L1 from intersecting each other in an optical path that starts from the light collection optical system and reaches the surface 10a.

As shown in Fig. 1, the light collection optical system in the present embodiment is made up of a single unit of the condenser lens 1. All the beams of the laser light L1 are incident on the common condenser lens 1. However, embodiments are not limited to the embodiment of the single unit of the condenser lens 1. A plurality of condenser lenses may be disposed in series such that a beam of laser light passes through the condenser lenses in sequence. The condenser lenses may be disposed in parallel such that different beams of laser light are incident on the different condenser lenses.

In the present embodiment, a beam shaping optical system is disposed between the laser emitting ends 2e and the condenser lens 1 such that elements of the beam shaping optical system correspond to the plurality of respective laser emitting ends 2e. In the present embodiment, a beam expander 7 is disposed as the beam shaping optical system. The beam expander 7 is an optical system that expands a diameter of the beam emitted from each laser emitting ends 2e. Use of the beam expander 7 allows the gap between the beams of the laser light on an incident surface of the light collection optical system to be set to a desired value. This allows a size of the focused spot Ls and the gap between the focused spots Ls on the surface 10a to be adjusted.

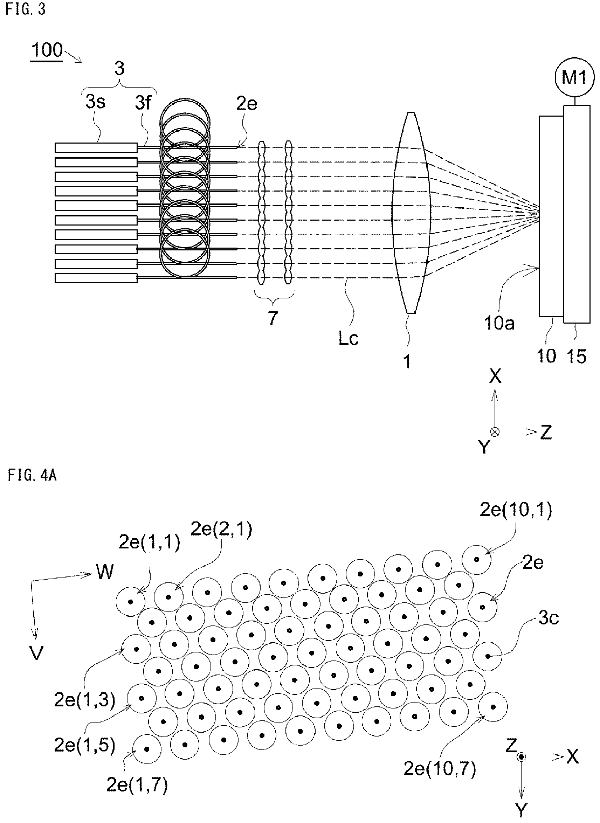

The laser light L1 passing through the light collection optical system and being emitted from the beam expander 7 may be rendered collimated light (parallel light) or may be rendered convergent light. In the laser machining device 100 shown in Fig. 1, the laser light L1 emitted from the beam expander 7 is rendered convergent light, and the diameter of the beam is reduced. By being rendered convergent light, a focal point of the light is intentionally shifted from the surface 10a. This allows the size of the focused spot Ls and the gap between the focused spots Ls on the surface 10a to be more finely adjusted.
[Details of laser machining device] Fig. 3 is a diagram showing the laser machining device 100 in detail. In Fig. 3, for improved visibility, a pencil of rays (dot-and-dash lines), shown in Fig. 1, in each beam of the laser light L1 is not shown but only the optical axis Lc is shown in each beam of the laser light L1. The plurality of laser sources 3 each include a light source unit 3s and a fiber 3f to guide laser light from the light source unit 3s. A plurality of the fibers 3f are bundled together to constitute a fiber bundle.

In the present embodiment, the beam expander 7 includes two convex lens arrays combined together. However, the beam expander 7 may include a convex lens array and a concave lens array that are combined together. Instead of the lens arrays, small individual lenses may be arranged. The beam shaping optical system may be positioned upstream of the laser emitting ends 2e. In other words, the beam shaping optical system may be built in the laser sources 3. Thus, the beam shaping optical system is not an essential component in the laser machining device 100 of the present embodiment.

Fig. 4A is a diagram of the laser emitting ends 2e that are bundled in the laser machining device 100 of Fig. 3, viewed from the beam expander 7 side in the -Z direction. Fig. 4A shows the plurality of laser emitting ends 2e that constitute the fiber bundle and a core 3c in a middle of each of the laser emitting ends 2e. Laser light is emitted from the core 3c. The laser emitting ends 2e of the fibers 3f are arranged in a W direction and a V direction. The arrangement of the laser emitting ends 2e is reflected in an arrangement of the focused spots Ls. In the present embodiment, as described above, the laser machining device does not include an optical system configured to change the overall direction of travel of the laser light between the laser emitting ends 2e and the surface 10a. In this case, a direction in which the laser emitting ends are arranged coincides with a direction in which the focused spots are arranged. In the present embodiment, the W direction corresponds to a third arrangement direction for the focused spots, and the V direction corresponds to a fourth arrangement direction for the focused spots.

When the laser emitting ends 2e arranged in the W direction and the V direction are represented in the form of "2e(W,V)" according to an order of arrangement of the laser emitting ends, 2e(1,1), 2e(2,1), 2e(10,1), 2e(1,3), 2e(1,5), (1,7), and 2e(10,7) are shown, for example, as in Fig. 4A.

The laser emitting ends 2e are formed such that the third arrangement direction and the fourth arrangement direction (the W direction and the V direction in the present embodiment) each differ from the second direction (the Y direction) that is a relative movement direction. As a result of this, the focused spots Ls of the beams of the laser light emitted from 2e(1,1), 2e(1,3), 2e(1,5), and (1,7), which are the laser emitting ends 2e arranged in the V direction, differ in position in the X direction without overlapping each other. An effect of this will be described later.

In the present embodiment, the laser emitting ends 2e are arranged in a staggered manner such that each end is arranged at a point of intersection of lines of a grid or a center of a square in the grid. All the laser emitting ends 2e differ in position in the X direction even though the ends are arranged in a staggered manner. Thus, a plurality of grooves are formed at narrower pitch gaps. The laser emitting ends 2e may be arranged in a grid form such that the laser emitting ends 2e are arranged only at points of intersection of lines of a grid.

In Fig. 4A, a number of the fibers is arranged such that nine to 10 fibers are aligned in the W direction and three to four fibers are aligned in the V direction. However, the number of the arranged fibers is not particularly limited and may be larger than or smaller than that in Fig. 4A. Preferably, the number of the fibers is, in general, larger than that in Fig. 4A to design a laser machining device that has a production efficiency applicable to a volume production process. It is preferred that the number of the fibers is 100 or larger and is preferably 200 or larger, for example. An overall width of the fiber bundle of the laser emitting ends 2e (a dimension in the X direction) may be 20 mm or more, or in some cases, 40 mm or more.

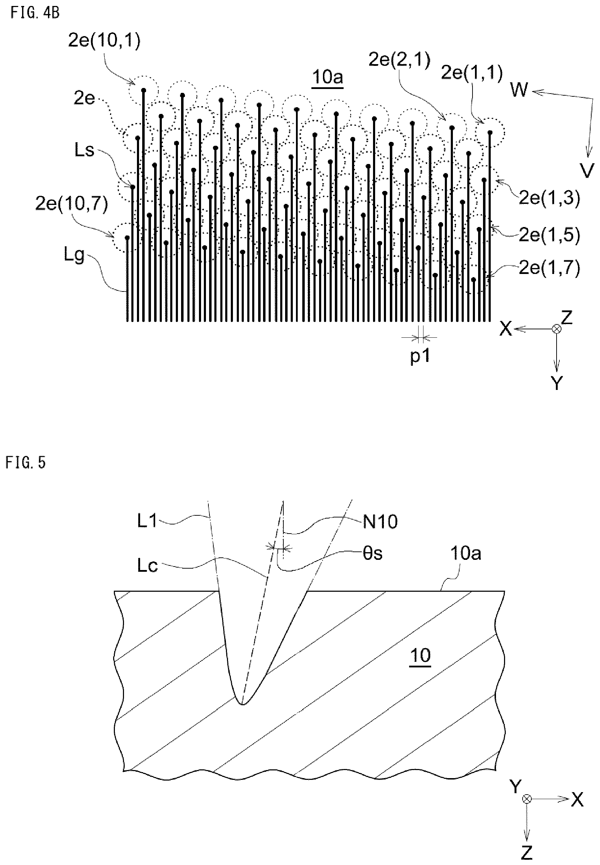

Fig. 4B is a diagram of the surface 10a, viewed from a position at which the condenser lens 1 is disposed. This diagram shows an appearance of the surface being machined by laser light. The focused spots Ls are formed by the beams of the laser light L1 emitted from the laser emitting ends 2e. As described above, the surface 10a is ablated at the focused spots Ls by laser ablation. As a result, a locus of each focused spot Ls formed by relative movement in the Y direction appears as a groove Lg along the Y direction.

All the laser emitting ends 2e at this time differ in position in the X direction, and thus all the focused spots Ls formed by the beams of the laser light differ in position in the X direction. As a result, all the grooves Lg formed by the beams of the laser light differ in position in the X direction.

In Fig. 4B, the laser emitting ends 2e that do not exist on the surface 10a are virtually shown. Of the laser emitting ends 2e shown in Fig. 4A, the laser emitting ends 2e(1,1), 2e(2,1), 2e(10,1), 2e(1,3), 2e(1,5), (1,7), and 2e(10,7) are assigned with the respective signs and are shown for example in in Fig. 4B. With the focused spots Ls being regarded as the cores 3c of the laser emitting ends 2e, the laser emitting ends 2e shown in Fig. 4B are expressed by being reduced to a predetermined scaling factor caused by the condenser lens 1. Fig. 4B indicates that use of the laser emitting ends 2e arranged to cause the focused spots Ls to differ in position in the X direction enables the gap between the adjacent grooves Lg and Lg to be made smaller than a diameter of the fiber. "The plurality of laser emitting ends arranged separately from each other" described herein means that ends emitting laser light to form grooves adjacent to each other, such as the laser emitting ends 2e(1,1) and 2e(1,3), are arranged separately from each other and kept from contact with each other.

Preferably, the laser machining device 100 is designed so as to make every gap between the adjacent grooves Lg and Lg uniform. A pitch p1 for the grooves is the sum of a single groove width (a dimension of the groove in the X direction) and a gap between the adjacent grooves Lg and Lg in the X direction. It is preferred that the pitch p1 is 100 µm or less and is preferably 50 µm. With a decrease in the pitch p1, a density of the grooves rises and thus the surface area increases. To decrease the pitch p1, the width of the groove Lg (the dimension in the X direction) is preferably made smaller. It is preferred that the width of the groove Lg is 50 µm or less and is preferably 25 µm.

Arranging the laser emitting ends 2e as described above makes it possible to decrease the pitch p1 for the grooves. Meanwhile, the pitch p1 can also be decreased by decreasing a diameter of each fiber 3f that constitutes the laser emitting end 2e or by reducing a focal length of the light collection optical system. For instance, when the condenser lens 1 with a focal length of 300 mm or less is used, the pitch p1 is readily made to 100 µm or less.

Fig. 5 is a cross-sectional view showing the laser light L1 being incident on the base material 10 along the optical axis Lc of the laser light L1. An angle that is formed by the optical axis Lc of the laser light L1 incident on the surface 10a with a normal line N10 to the surface 10a is an incidence angle θs. With a decrease in the incidence angle θs (when an incidence angle of the laser light L1 incident on the surface 10a comes closer to 90 degrees), a deep groove having a reduced inclination can be formed. This results in an increased amount of the adhesive filled in the grooves and an improved degree of filling, and makes it possible to maintain satisfactory adhesiveness. This also makes depths of the grooves formed by the beams of the laser light uniform and thus contributes to uniformed adhesive strength. It is preferred that the incidence angle θs of the laser light L1 is 20 degrees or less, is preferably 10 degrees or less, and is more preferably 7 degrees or less.

When the condenser lens 1 is used as the light collection optical system as in the present embodiment, the incidence angle θs of the beam of the laser light L1 increases with a decrease in distance from an end of the condenser lens 1 to a place through which the beam of the laser light L1 passes. Hence, the condenser lens 1 is preferably designed such that the numerical range described above is met by the incidence angle θs of the beam of the laser light L1 passing through the furthermost end of the condenser lens 1 at which the incidence angle θs is apt to be large. For instance, the focal length of the condenser lens 1 may be set to greater than or equal to a specified value (e.g., 100 mm or more) to make the incidence angle θs smaller. For instance, to prevent the laser light L1 from being incident on the end of the condenser lens 1, beams of the laser light may be condensed before incidence, or a numerical aperture of the condenser lens 1 may be increased. For instance, instead of the single unit of the condenser lens 1, a plurality of lenses may be combined and constitute a light collection optical system to condense a plurality of beams of the laser light while the incidence angle θs is kept to be as small as possible.

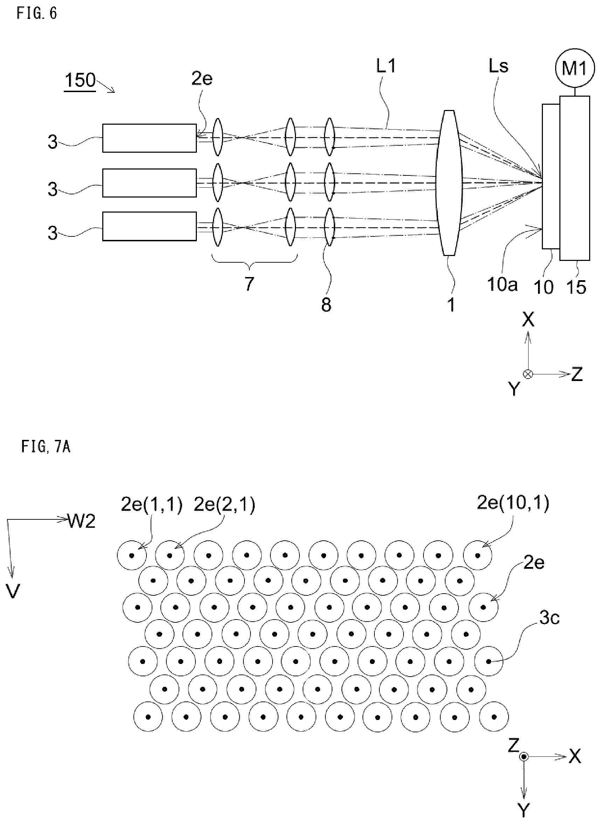

Fig. 6 shows a modification of the laser machining device. A laser machining device 150 includes the beam expander 7 and a converging optical system 8 as a beam shaping optical system. The converging optical system 8 is on a light-emitting side of the beam expander 7 and corresponds to each of the plurality of laser emitting ends 2e. The converging optical system 8 causes beams of the laser light L1 to converge, and the beams of the laser light L1 each having a reduced diameter are incident on the condenser lens 1. This allows the focal point of the light to be intentionally shifted from the surface 10a and makes it possible to finely adjust the size of the focused spot Ls and the gap between the focused spots Ls adjacent to each other on the surface 10a. When the beam shaping optical system includes the converging optical system 8, the laser light L1 emitted from the beam expander 7 may be divergent light rather than collimated light (parallel light) or convergent light. Other components of the laser machining device 150 are similar to those of the laser machining device 100.

Fig. 7A shows a modification of the laser emitting ends 2e of the laser machining device. Fig. 7A is a diagram of the laser emitting ends 2e that are bundled, viewed from the beam expander 7 side in the -Z direction. The laser emitting ends 2e of the fibers 3f are arranged in a W2 direction and the V direction. The W2 direction and the V direction each differ from the second direction (the Y direction), which is a relative movement direction. Thus, all the laser emitting ends 2e differ in position in the X direction.

In this modification, the W2 direction is identical to the X direction. For instance, in Fig. 7A, the laser emitting end 2e(1,1), the laser emitting end 2e(2, 1), and the laser emitting end 2e(10,1) that are aligned in the W2 direction have a common position in the Y direction.

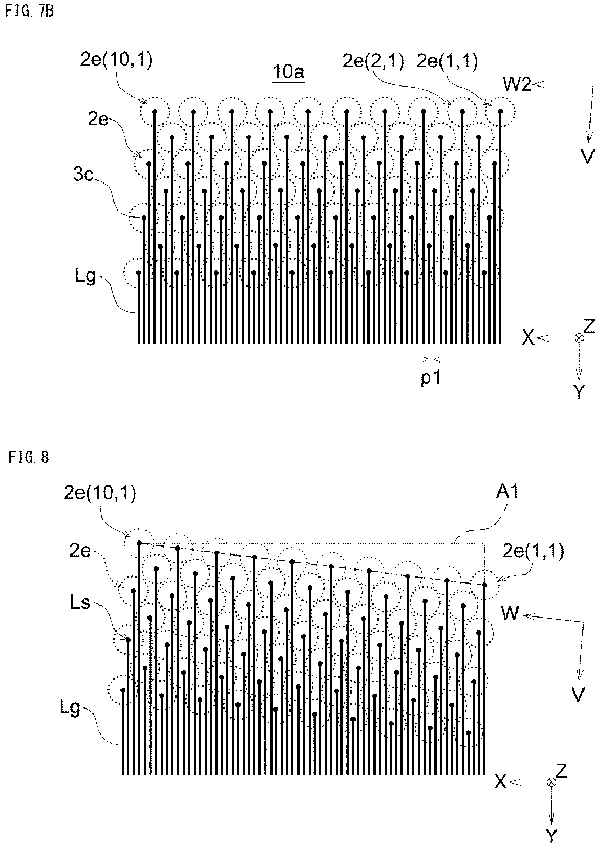

Fig. 7B is a diagram of the surface 10a, viewed from a position at which the condenser lens 1 is disposed, in the laser machining device that has the laser emitting ends 2e in Fig. 7A. In Fig. 7B, the laser emitting ends 2e that do not exist on the surface 10a are virtually shown. Of the laser emitting ends 2e shown in Fig. 7A, the laser emitting end 2e(1,1), the laser emitting end 2e(2, 1), and the laser emitting end 2e(10,1) are assigned with the respective signs and are shown in in Fig. 7B.

With reference to Figs. 7B and 8, an effect of the laser emitting ends 2e shown in Fig. 7A will be described. Fig. 8 is a diagram of the surface 10a of the base material 10 as in Fig. 4B, viewed in the +Z direction from a position at which the condenser lens 1 is disposed, showing the laser emitting ends in the first embodiment. In Fig. 8, since the laser emitting ends 2e are aligned in the W direction, places at which the grooves start to be formed (places of ends of the grooves in the Y direction) differ among the laser emitting ends 2e(1,1) to 2e(10,1). Because of a difference in place at which the groove starts to be formed, a blank area A1 (an area surrounded by a dot-and-dash line in Fig. 8) where no groove is formed is produced.

In contrast, in Fig. 7B, the laser emitting ends 2e(1,1) to 2e(10,1) are aligned in the W2 direction parallel to the X direction. Thus, the blank area A1 where no groove is formed is not produced, and places at which the grooves start are uniform. This results in a small blank area where no groove is formed and helps to improve bonding strength provided by an adhesive. However, even the arrangement of the laser emitting ends 2e in Fig. 8 can make the groove starting places uniform if timing with which the laser light starts to be emitted varies according to the laser emitting end 2e.

The laser machining device 100 includes a controller (not shown) to control the driving mechanism M1 and lighting of the light sources. Further, the controller may control the light collection optical system, such as the condenser lens 1, the beam shaping optical system, and the converging optical system, for example. The controller is not an essential component in the laser machining device 100. For instance, the laser machining device 100 may be controlled by a controller outside the laser machining device 100 or may be controlled by an operator.

### <Second embodiment>

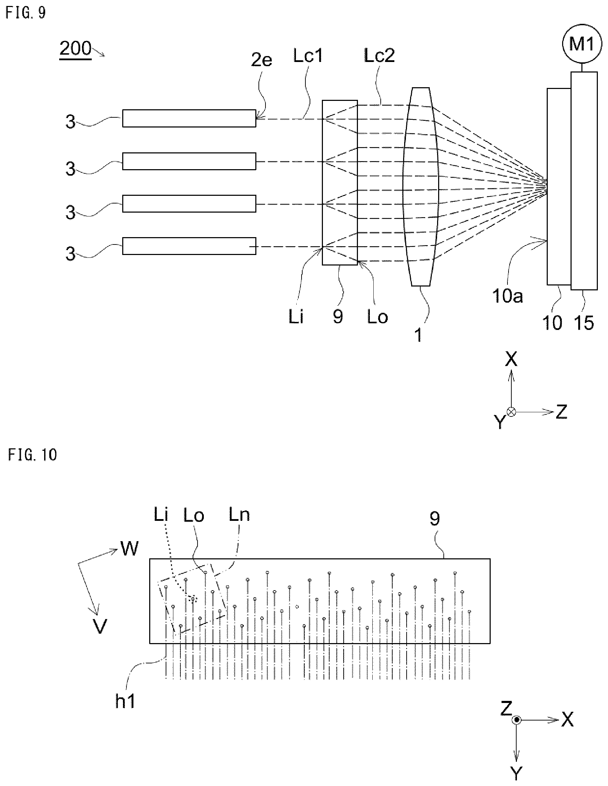

Fig. 9 is a diagram showing a laser machining device 200 according to a second embodiment. As for the matters to be described below, the second embodiment will be described by focusing on differences from the first embodiment. Matters other than those described below are the same as those in the first embodiment. The same applies to the third embodiment.

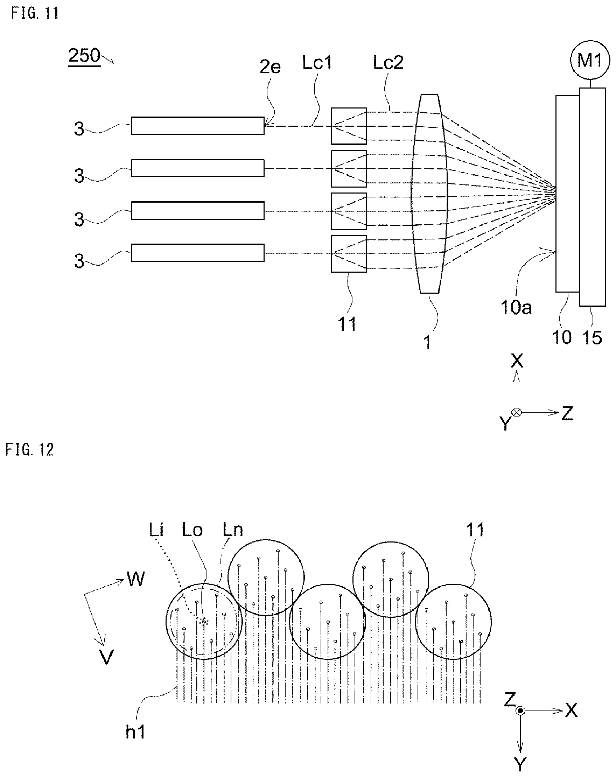

Between a plurality of laser emitting ends 2e and a condenser lens 1, a diffractive optical element (DOE) 9 is disposed to convert laser light into a plurality of branched laser beams. In the present embodiment, the diffractive optical element 9 is a single optical element, and all beams of the laser light emitted from the plurality of laser emitting ends 2e are incident on the diffractive optical element 9, which is a single optical element. In Fig. 9 and Fig. 11 described later, each beam of the laser light is represented only by an optical axis for improved visibility. Each beam of the laser light including an optical axis Lc1 is incident on the diffractive optical element 9 through a place Li and is converted into a plurality of branched laser beams inside the diffractive optical element 9. Each of the branched laser beams including an optical axis Lc3 is emitted from a place Lo.

Fig. 10 is a diagram of the diffractive optical element 9, viewed from the condenser lens 1 side in the -Z direction. The place Li through which each beam of the laser light is incident is on a back side of the diffractive optical element 9 shown in Fig. 10. One beam of the laser light incident through the place Li is converted into nine branched laser beams, and the branched laser beams are emitted from nine places Lo inside a zone Ln around the place Li. A number of the laser beams branched from one beam of the laser light is not particularly limited. However, if one beam of the laser light branches into a large number of beams, power of the laser drops accordingly. Thus, it is preferred that one beam of the laser light branches into 25 beams or less, preferably branches into 16 beams or less, and more preferably branches into nine beams or less. In Fig. 10, beams of the laser light are incident such that the places Li are separated from each other in the X direction (the first direction) and the branched laser beams are emitted from each of the zones. Specifically, nine branched laser beams branched from one beam of the laser light constitute a group, and a plurality of such groups are formed in the X direction (the first direction).

The places Lo through which the branched laser beams are emitted from the diffractive optical element 9 are arranged in a W direction and a V direction orthogonal to the W direction. In the present embodiment, the laser machining device does not include an optical system configured to change the overall direction of travel of the laser light between the laser emitting ends 2e and the surface 10a. In this case, a direction in which the branched laser beams are arranged coincides with a direction in which the focused spots are arranged. In the present embodiment, the W direction corresponds to the third arrangement direction for the focused spots, and the V direction corresponds to the fourth arrangement direction for the focused spots.

The places Lo through which the branched laser beams are emitted are arranged so as to incline relative to the X direction and the Y direction. A line h1 represents a reference line extending from each of the places Lo in the Y direction. The reference lines h1 do not overlap each other. This indicates that all the places Lo differ in position in the X direction. Preferably, a gap between the reference lines h1 adjacent to each other is constant (in other words, a constant pitch is presented). Assuming that the reference line h1 is projected on the base material 10, the reference line h1 coincides with a locus of each focused spot Ls formed by relative movement as shown in Fig. 4B, i.e., a groove. This indicates that an instance of use of the diffractive optical element 9 also allows a plurality of grooves to be formed at narrow pitch gaps when the places Lo for branched laser beams are arranged to incline.

Fig. 11 shows a laser machining device 250 that is a modification of the laser machining device 200. The laser machining device 250 includes diffractive optical elements 11 that are equal in number to the laser emitting ends 2e and that are disposed so as to correspond with the plurality of laser emitting ends 2e. Each of the diffractive optical elements 11 used in this modification is smaller than the single unit of the diffractive optical element and thus offers an advantage of being highly flexible in designing a laser machining device layout. In another example of modification, the laser machining device may include two or more pieces of the diffractive optical elements that are fewer than the number of the laser emitting ends 2e.

Fig. 12 is a diagram of the diffractive optical elements 11, viewed in the -Z direction. The place Li through which each beam of the laser light is incident is on the back side of each diffractive optical element 11 shown in Fig. 12. One beam of the laser light incident through the place Li into the diffractive optical element 11 is converted into nine branched laser beams, and the branched laser beams are emitted through the nine places Lo from the same diffractive optical element 11. In the laser machining device 250 as shown in Fig. 12, in order to arrange the plurality of diffractive optical elements 11 close to each other in the X direction, the diffractive optical elements 11 each having a disc shape are arranged in a staggered manner. However, the shape and layout of the diffractive optical elements 11 are not limited to this example.

In a similar way to Fig. 10, the diffractive optical element 11 is designed such that the places Lo through which the laser beams are emitted from the diffractive optical element 11 are arranged in the W direction (the third arrangement direction) and the V direction (the fourth arrangement direction). A line h1 represents a reference line extending from each of the places Lo in the Y direction. The reference lines h1 do not overlap each other. Preferably, a gap between the reference lines h1 adjacent to each other is constant (in other words, a constant pitch is presented).

### <Third embodiment>

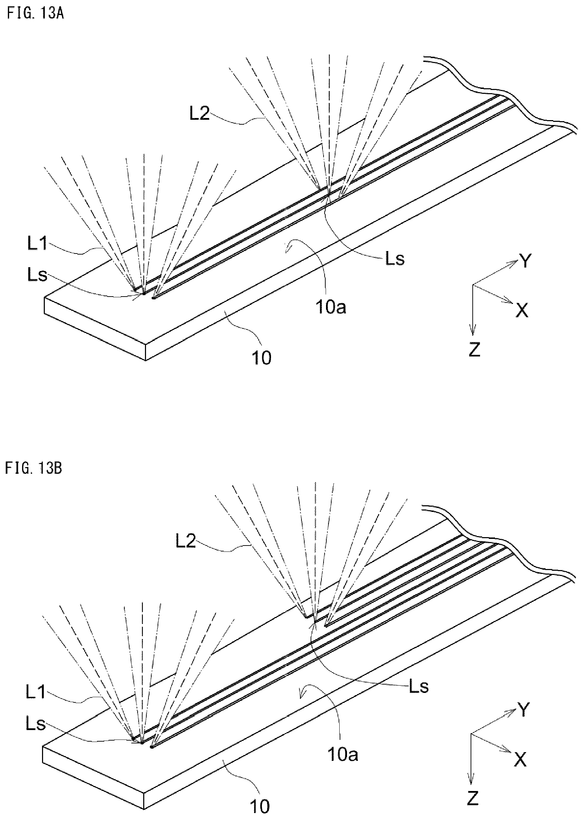

Figs. 13A and 13B each exemplify an embodiment in which laser machining is performed by a combination of a plurality of laser machining devices. In any of the diagrams, individual laser machining devices perform laser machining at a plurality of sites that are separated from each other on a common surface 10a in the Y direction (the second direction). The individual laser machining devices may have respective controllers, and with the controllers communicating with each other, the laser machining devices may perform laser machining cooperatively. Alternatively, the individual laser machining devices may have a shared controller, and with the shared controller controlling the laser machining devices, the laser machining devices may perform laser machining cooperatively.

In a first example of Fig. 13A, grooves are formed by laser light L1 radiated to the surface 10a from a first laser machining device, and laser light L2 is radiated from a second laser machining device such that beams of the laser light coincide with the grooves. This allows the grooves to be made deeper.

In a second example of Fig. 13B, grooves are formed by laser light L1 radiated to the surface 10a from the first laser machining device, and laser light L2 is radiated from the second laser machining device such that beams of the laser light are slightly shifted from the grooves in the X direction. This allows an increased number of the grooves to be formed by relative movement for each time.

The embodiments and the modifications thereof have been described above. However, the present invention is not limited to the embodiments and the modifications described above, and various changes or modifications may be made to the above embodiments without departing from the scope of the claims.

### DESCRIPTION OF REFERENCE SIGNS

- 1: Condenser lens
- 2e: Laser emitting end
- 3: laser source
- 3c: Core
- 3f: Fiber
- 3s: Light source unit
- 7: Beam expander
- 8: Converging optical system
- 9: Diffractive optical element
- 10: Base material
- 10a: Surface to be machined (of base material)
- 11: Diffractive optical element
- 15: Stage
- 100, 150, 200, 250: Laser machining device
- L1, L2: Laser light
- Lc, Lc1, Lc3: Optical axis
- Lg: Groove
- Ls: Focused spot
- M1: Driving mechanism

## Claims

1. A laser machining method comprising:
emitting a beam of laser light in a form of pulse from each of a plurality of laser emitting ends (2e) into a space, the plurality of laser emitting ends (2e) being arranged separately from each other;
making a plurality of beams of the laser light incident on a light collection optical system that reduces a gap between the beams of the laser light to such an extent that the plurality of beams of the laser light are prevented from intersecting each other on a surface to be machined;
irradiating the surface to be machined with the plurality of beams of the laser light emitted from the light collection optical system to form a plurality of focused spots separated from each other in a first direction, the plurality of focused spots each causing ablation; and
moving the light collection optical system and the surface to be machined relative to each other both along the surface to be machined and in a second direction orthogonal to the first direction to simultaneously form a plurality of grooves on the surface to be machined,
wherein
the plurality of focused spots are formed so as to be aligned in a third arrangement direction and a fourth arrangement direction, **characterized in that**
the third arrangement direction and the fourth arrangement direction each differ from the second direction, and
at least one diffractive optical element (9) is disposed between the plurality of laser emitting ends (2e) and the light collection optical system to convert at least one of the beams of the laser light into a plurality of branched laser beams.

2. The laser machining method according to claim 1, wherein an incidence angle θs that is formed by an optical axis of each of the plurality of beams of the laser light incident on the surface to be machined with a normal line to the surface to be machined is 20 degrees or less.

3. The laser machining method according to claim 1, wherein
the light collection optical system includes a single unit of a condenser lens on which the beams of the laser light are incident, and
a focal length of the condenser lens is less than 300 mm.

4. The laser machining method according to any one of claims 1 to 3, wherein the at least one diffractive optical element (9) converts each of the plurality of beams of the laser light into the plurality of branched laser beams.

5. The laser machining method according to any one of claims 1 to 3, wherein the at least one diffractive optical element (9) makes the plurality of beams of the laser light incident on a same diffractive optical element (9).

6. The laser machining method according to any one of claims 1 to 3, wherein
the laser emitting ends (2e) constitute an emitting end of a fiber bundle that includes a plurality of fibers (3f) bundled together, and
the fibers (3f) are arranged at the emitting end (2e) such that the focused spots are formed in a predetermined position.

7. The laser machining method according to claim 1, wherein
the laser emitting ends (2e) constitute an emitting end of a fiber bundle that includes a plurality of fibers (3f) bundled together, and
the fibers (3f) are arranged at the emitting end (2e) such that the third arrangement direction for the focused spots is identical to the first direction.

8. The laser machining method according to claim 6, wherein a beam shaping optical system is disposed between the laser emitting ends (2e) and the light collection optical system such that elements of the beam shaping optical system correspond to the plurality of respective laser emitting ends (2e).

9. The laser machining method according to claim 8, wherein
the beam shaping optical system includes a beam expander (7) to expand a diameter of each of the beams of the laser light and a converging optical system on a light-emitting side of the beam expander (7), and
the beams of the laser light are incident on the light collection optical system while gradually reducing the diameter of each of the beams of the laser light.

10. A laser machining method that performs the laser machining method according to any one of claims 1 to 3 on the surface to be machined (10a) at a plurality of sites that are separated from each other in the second direction.

11. A laser machining device comprising:
a plurality of laser emitting ends (2e) arranged separately from each other to emit a beam of laser light, respectively, in a form of pulse into a space;
a light collection optical system on which beams of the laser light emitted from the plurality of laser emitting ends (2e) are incident, the light collection optical system being configured to reduce a gap between the beams of the laser light to such an extent that a plurality of the beams of the laser light are prevented from intersecting each other on a surface to be machined (10a); and
a driving mechanism to move the light collection optical system and the surface to be machined (10a) relative to each other both along the surface to be machined (10a) and in a second direction orthogonal to a first direction, wherein
the laser machining device is controlled to move the light collection optical system and the surface to be machined (10a) relative to each other by the driving mechanism to simultaneously form a plurality of grooves on the surface to be machined (10a) while irradiating the surface to be machined (10a) with the plurality of the beams of the laser light emitted from the light collection optical system to form a plurality of focused spots separated from each other in the first direction,
wherein
the plurality of focused spots are formed so as to be aligned in a third arrangement direction and a fourth arrangement direction, and **characterized in that**
the third arrangement direction and the fourth arrangement direction each differ from the second direction, and
at least one diffractive optical element (9) is disposed between the plurality of laser emitting ends (2e) and the light collection optical system to convert at least one of the beams of the laser light into a plurality of branched laser beams.

## Patentansprüche

1. Laserbearbeitungsverfahren, umfassend:
Aussenden eines Laserstrahls in Form eines Impulses von jedem einer Vielzahl von Laseremissionsenden (2e) in einen Raum, wobei die Vielzahl von Laseremissionsenden (2e) voneinander getrennt angeordnet ist,
Einfallenlassen einer Vielzahl von Strahlen von Laserlicht auf ein optisches Lichtsammelsystem, das den Abstand zwischen den Strahlen des Laserlichts so weit verringert, dass die Vielzahl von Strahlen des Laserlichts daran gehindert wird, sich auf einer zu bearbeitenden Oberfläche zu schneiden,
Bestrahlen der zu bearbeitenden Oberfläche mit der Vielzahl von Strahlen des Laserlichts, die von dem optischen Lichtsammelsystem emittiert wird, um eine Vielzahl von fokussierten Punkten zu erzeugen, die in einer ersten Richtung voneinander getrennt sind, wobei die Vielzahl von fokussierten Punkten jeweils eine Ablation bewirkt, und
Bewegen des optischen Lichtsammelsystems und der zu bearbeitenden Oberfläche relativ zueinander sowohl entlang der zu bearbeitenden Oberfläche als auch in einer zweiten Richtung orthogonal zur ersten Richtung, um gleichzeitig eine Vielzahl von Rillen auf der zu bearbeitenden Oberfläche zu erzeugen,
wobei die Vielzahl von fokussierten Punkten so gebildet wird, dass sie in einer dritten Anordnungsrichtung und einer vierten Anordnungsrichtung ausgerichtet sind,
**dadurch gekennzeichnet, dass**
die dritte Anordnungsrichtung und die vierte Anordnungsrichtung jeweils von der zweiten Richtung abweichen, und
wenigstens ein optisches Diffraktionselement (9) zwischen der Vielzahl von Laseremissionsenden (2e) und dem optischen Lichtsammelsystem angeordnet ist, um wenigstens einen der Strahlen des Laserlichts in eine Vielzahl von verzweigten Laserstrahlen umzuwandeln.

2. Laserbearbeitungsverfahren nach Anspruch 1, wobei ein Einfallswinkel θs, der von einer optischen Achse jedes der Vielzahl von Strahlen des Laserlichts, die auf die zu bearbeitende Oberfläche einfallen, mit einer zur zu bearbeitenden Oberfläche senkrechten Linie gebildet wird, 20 Grad oder weniger beträgt.

3. Laserbearbeitungsverfahren nach Anspruch 1, wobei
das optische Lichtsammelsystem eine einzelne Einheit einer Kondensationslinse umfasst, auf die die Strahlen des Laserlichts auftreffen, und
eine Brennweite der Kondensationslinse weniger als 300 mm beträgt.

4. Laserbearbeitungsverfahren nach einem der Ansprüche 1 bis 3, wobei das wenigstens eine optische Diffraktionselement (9) jeden der Vielzahl von Strahlen des Laserlichts in die Vielzahl von verzweigten Strahlen des Laserlichts umwandelt.

5. Laserbearbeitungsverfahren nach einem der Ansprüche 1 bis 3, wobei das wenigstens eine optische Diffraktionselement (9) die Vielzahl von Strahlen des Laserlichts auf dasselbe optische Diffraktionselement (9) auftreffen lässt.

6. Laserbearbeitungsverfahren nach einem der Ansprüche 1 bis 3, wobei
die Laseremissionsenden (2e) ein Emissionsende eines Faserbündels bilden, das eine Vielzahl von zusammengebündelten Fasern (3f) umfasst, und
die Fasern (3f) am Emissionsende (2e) so angeordnet sind, dass die fokussierten Spots an einer vorbestimmten Position gebildet werden.

7. Laserbearbeitungsverfahren nach Anspruch 1, wobei
die Laseremissionsenden (2e) ein Emissionsende eines Faserbündels bilden, das eine Vielzahl von zusammengebündelten Fasern (3f) umfasst, und
die Fasern (3f) am Emissionsende (2e) so angeordnet sind, dass die dritte Anordnungsrichtung für die fokussierten Spots mit der ersten Richtung identisch ist.

8. Laserbearbeitungsverfahren nach Anspruch 6, wobei ein strahlformendes optisches System zwischen den Laseremissionsenden (2e) und dem optischen Lichtsammelsystem derart angeordnet ist, dass Elemente des strahlformenden optischen Systems der Vielzahl der jeweiligen Laseremissionsenden (2e) entsprechen.

9. Laserbearbeitungsverfahren nach Anspruch 8, wobei
das strahlformende optische System einen Strahlaufweiter (7) zum Vergrößern des Durchmessers jedes der Strahlen des Laserlichts und ein konvergierendes optisches System auf der Lichtaustrittsseite des Strahlaufweiters (7) umfasst, und
die Strahlen des Laserlichts auf das optische Lichtsammelsystem auftreffen, während der Durchmesser jedes der Strahlen des Laserlichts allmählich verringert wird.

10. Laserbearbeitungsverfahren, das das Laserbearbeitungsverfahren gemäß einem der Ansprüche 1 bis 3 an der zu bearbeitenden Oberfläche (10a) an einer Vielzahl von Stellen durchführt, die in der zweiten Richtung voneinander getrennt sind.

11. Laserbearbeitungsvorrichtung, umfassend:
eine Vielzahl von Laseremissionsenden (2e), die voneinander getrennt angeordnet sind, um jeweils einen Strahl Laserlichts in Form eines Impulses in einen Raum zu emittieren,
ein optisches Lichtsammelsystem, auf das von der Vielzahl von Laseremissionsenden (2e) emittierte Strahlen des Laserlichts auftreffen, wobei das optische Lichtsammelsystem so konfiguriert ist, dass es einen Abstand zwischen den Strahlen des Laserlichts so weit verringert, dass verhindert wird, dass sich eine Vielzahl der Strahlen des Laserlichts auf einer zu bearbeitenden Oberfläche (10a) schneiden, und
einen Antriebsmechanismus, um das optische Lichtsammelsystem und die zu bearbeitende Oberfläche (10a) sowohl entlang der zu bearbeitenden Oberfläche (10a) als auch in einer zweiten Richtung orthogonal zu einer ersten Richtung relativ zueinander zu bewegen, wobei
die Laserbearbeitungsvorrichtung so gesteuert wird, dass sie das optische Lichtsammelsystem und die zu bearbeitende Oberfläche (10a) durch den Antriebsmechanismus relativ zueinander bewegt, um gleichzeitig eine Vielzahl von Rillen auf der zu bearbeitenden Oberfläche (10a) zu bilden, während die zu bearbeitende Oberfläche (10a) mit der Vielzahl der von dem optischen Lichtsammelsystem emittierten Strahlen des Laserlichts bestrahlt wird, um eine Vielzahl von fokussierten Spots zu erzeugen, die in der ersten Richtung voneinander getrennt sind,
wobei die Vielzahl von fokussierten Spots so gebildet wird, dass sie in einer dritten Anordnungsrichtung und einer vierten Anordnungsrichtung ausgerichtet sind,
**dadurch gekennzeichnet, dass**
sich die dritte Anordnungsrichtung und die vierte Anordnungsrichtung jeweils von der zweiten Richtung unterscheiden, und
wenigstens ein optisches Diffraktionselement (9) zwischen der Vielzahl von Laseremissionsenden (2e) und dem optischen Lichtsammelsystem angeordnet ist, um wenigstens einen der Strahlen des Laserlichts in eine Vielzahl von verzweigten Laserstrahlen umzuwandeln.

## Revendications

1. Procédé d'usinage au laser comprenant les étapes consistant à :
émettre un faisceau de lumière laser sous forme pulsée depuis chacune d'une pluralité d'extrémités d'émission laser (2e) dans un espace, la pluralité d'extrémités d'émission laser (2e) étant agencées séparément les unes des autres ;
amener une pluralité de faisceaux de la lumière laser à être incidents sur un système optique de collecte de la lumière qui réduit une distance entre les faisceaux de la lumière laser dans une mesure telle que la pluralité de faisceaux de la lumière laser ne peuvent pas s'intersecter sur une surface à usiner ;
irradier la surface à usiner avec la pluralité de faisceaux de la lumière laser émise depuis le système optique de collecte de la lumière pour former une pluralité de points focalisés séparés les uns des autres dans une première direction, la pluralité de points focalisés entraînant chacun une ablation ; et
déplacer le système optique de collecte de la lumière et la surface à usiner l'un par rapport à l'autre, tous deux le long de la surface à usiner et dans une deuxième direction perpendiculaire à la première direction pour former simultanément une pluralité de rainures sur la surface à usiner,
dans lequel la pluralité de points focalisés sont formés de façon à être alignés dans une troisième direction d'agencement et une quatrième direction d'agencement,
**caractérisé en ce que**
la troisième direction d'agencement et la quatrième direction d'agencement diffèrent chacune de la deuxième direction, et
qu'au moins un élément optique diffractant (9) est disposé entre la pluralité d'extrémités d'émission laser (2e) et le système optique de collecte de la lumière pour transformer au moins un des faisceaux de la lumière laser en une pluralité de faisceaux laser ramifiés.

2. Procédé d'usinage au laser selon la revendication 1, dans lequel un angle d'incidence θs, qui est formé par un axe optique de chacun de la pluralité de faisceaux de la lumière laser incident sur la surface à usiner avec une ligne perpendiculaire à la surface à usiner, est inférieur ou égal à 20 degrés.

3. Procédé d'usinage au laser selon la revendication 1, dans lequel
le système optique de collecte de la lumière comporte une seule unité de lentille condensatrice sur laquelle les faisceaux de la lumière laser sont incidents, et
une distance focale de la lentille condensatrice est inférieure à 300 mm.

4. Procédé d'usinage au laser selon l'une quelconque des revendications 1 à 3, dans lequel l'au moins un élément optique diffractant (9) transforme chacun de la pluralité de faisceaux de la lumière laser en la pluralité de faisceaux laser ramifiés.

5. Procédé d'usinage au laser selon l'une quelconque des revendications 1 à 3, dans lequel l'au moins un élément optique diffractant (9) amène la pluralité de faisceaux de la lumière laser à être incidents sur un même élément optique diffractant (9).

6. Procédé d'usinage au laser selon l'une quelconque des revendications 1 à 3, dans lequel
les extrémités d'émission laser (2e) constituent une extrémité d'émission d'un faisceau de fibres qui comporte une pluralité de fibres (3f) regroupées, et
les fibres (3f) sont agencées sur l'extrémité d'émission (2e) de telle sorte que les points focalisés sont formés dans une position prédéfinie.

7. Procédé d'usinage au laser selon la revendication 1, dans lequel
les extrémités d'émission laser (2e) constituent une extrémité d'émission d'un faisceau de fibres qui comporte une pluralité de fibres (3f) regroupées, et
les fibres (3f) sont agencées au niveau de l'extrémité d'émission (2e) de telle sorte que la troisième direction d'agencement pour les points focalisés est identique à la première direction.

8. Procédé d'usinage au laser selon la revendication 6, dans lequel un système optique de modelage de faisceau est disposé entre les extrémités d'émission de laser (2e) et le système optique de collecte de la lumière de telle sorte que des éléments du système optique de modelage de faisceau correspondent à la pluralité d'extrémités d'émission laser (2e) respectives.

9. Procédé d'usinage au laser selon la revendication 8, dans lequel
le système optique de modelage de faisceau comporte un expanseur de faisceau (7) pour augmenter un diamètre de chacun des faisceaux de la lumière laser et un système optique convergent sur un côté émission de lumière de l'expanseur de faisceau (7), et
les faisceaux de la lumière laser sont incidents sur le système optique de collecte de la lumière tandis que le diamètre de chacun des faisceaux de la lumière laser est réduit progressivement.

10. Procédé d'usinage au laser qui exécute le procédé d'usinage au laser selon l'une quelconque des revendications 1 à 3 sur la surface à usiner (10a) en une pluralité d'emplacements qui sont séparés les uns des autres dans la deuxième direction.

11. Dispositif d'usinage au laser comprenant :
une pluralité d'extrémités d'émission laser (2e) agencées séparément les unes des autres pour émettre chacune un faisceau de lumière laser sous forme pulsée dans un espace ;
un système optique de collecte de la lumière sur lequel des faisceaux de la lumière laser émise depuis la pluralité d'extrémités d'émission laser (2e) sont incidents, le système optique de collecte de la lumière étant configuré pour réduire une distance entre les faisceaux de la lumière laser dans une mesure telle qu'une pluralité des faisceaux de la lumière laser ne peuvent pas s'intersecter sur une surface à usiner (10a) ; et
un mécanisme d'entraînement pour déplacer le système optique de collecte de la lumière et la surface à usiner (10a) l'un par rapport à l'autre, tous deux le long de la surface à usiner (10a) et dans une deuxième direction perpendiculaire à une première direction, dans lequel
le dispositif d'usinage au laser est commandé de façon à déplacer le système optique de collecte de la lumière et la surface à usiner (10a) l'un par rapport à l'autre au moyen du mécanisme d'entraînement pour former simultanément une pluralité de rainures sur la surface à usiner (10a) tandis que la surface à usiner (10a) est irradiée avec la pluralité des faisceaux de la lumière laser émise depuis le système optique de collecte de la lumière pour former une pluralité de points focalisés séparés les uns des autres dans la première direction,
dans lequel la pluralité de points focalisés sont formés de façon à être alignés dans une troisième direction d'agencement et une quatrième direction d'agencement, et
**caractérisé en ce que**
la troisième direction d'agencement et la quatrième direction d'agencement diffèrent chacune de la deuxième direction, et
qu'au moins un élément optique diffractant (9) est disposé entre la pluralité d'extrémités d'émission laser (2e) et le système optique de collecte de la lumière pour transformer au moins un des faisceaux de la lumière laser en une pluralité de faisceaux laser ramifiés.
